# EUROPEAN PATENT APPLICATION

(11) **EP 4 732 962 A1**
(43) Date of publication of application: **29.04.2026**
(21) Application number: 24917332.9
(22) Date of filing: 19.12.2024
(51) Int. Cl.: B05C 5/02, H01M 4/04

(54) **SLOT DIE COATER**

(30) Priority: 10.01.2024 KR 20240004388; 19.06.2024 KR 20240079909
(71) Applicant: LG Energy Solution, Ltd., Seoul 07335 (KR)
(72) Inventor: JO, Young-Joon, Daejeon 34122 (KR); KIM, Man-Hyeong, Daejeon 34122 (KR); MOON, Young-Gyu, Daejeon 34122 (KR); JEON, Shin-Wook, Daejeon 34122 (KR)
(74) Representative: Plasseraud IP
(86) International application number: PCT/KR2024/020734
(87) International publication number: WO 2025/150737

(57) **Abstract**

A slot die coater of the present disclosure has a slot for discharging a coating solution in the opposite direction of gravity onto a surface of a substrate that is continuously driven and transferred by a coating roll, and the slot die coater includes a first die block; and a second die block forming the slot between the first die block and the second die block, wherein a center of rotation axis of the coating roll is positioned toward the second die block rather than an upper part of a first die lip forming a tip of the first die block with respect to the substrate.

## Description

### TECHNICAL FIELD

The present disclosure relates to a slot die coater, and more specifically, to a vertical die type slot die coater in which a coating solution is discharged in the opposite direction of gravity. This application is based on and claims priority from Korean Patent Application No. 10-2024-0004388, filed on January 10, 2024 and No. 10-2024-0079909, filed on June 19, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Such secondary batteries essentially include an electrode assembly, which is a power generation element. The electrode assembly has a form in which a positive electrode, a separator, and a negative electrode are stacked at least once, and the positive electrode and the negative electrode are manufactured by applying and drying a positive electrode active material slurry and a negative electrode active material slurry on a current collector made of aluminum foil and copper foil, respectively. In order to make the charging and discharging characteristics of the secondary battery uniform, the positive electrode active material slurry and the negative electrode active material slurry should be evenly coated on the current collector, and a slot die coater has been used conventionally.

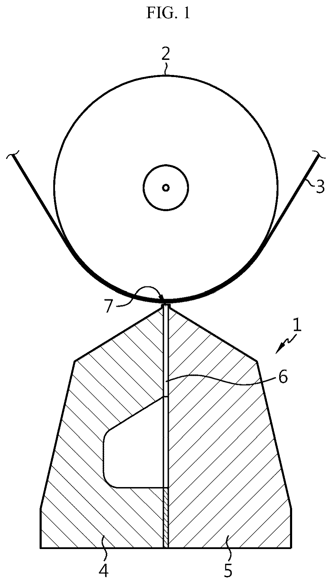

FIG. 1 is a cross-sectional view of a conventional slot die coater.

Referring to FIG. 1, in an electrode manufacturing method using a conventional slot die coater 1, an electrode active material slurry discharged from a slot die coater 1 is applied onto a current collector 3 transferred by a coating roll 2. The electrode active material slurry discharged from the slot die coater 1 is widely applied to one surface of the current collector 3 to form an active material layer. The slot die coater 1 includes two die blocks 4, 5 and forms a slot 6 between the two die blocks 4, 5, and may form one active material layer by discharging one type of electrode active material slurry through an outlet 7 communicating with the slot 6. The slot die coater 1 has the advantage of high-speed coating compared to bar coating or comma coating, and thus is widely applied from the viewpoint of high productivity. The slot die coater 1 illustrated as an example in FIG. 1 is a vertical die type in which the electrode active material slurry is discharged in the opposite direction of gravity.

In order to manufacture a secondary battery with high-energy density, the thickness of the active material layer, which was about 130 µm, is gradually increasing to 300 µm. After forming a thick active material layer using the conventional slot die coater 1, migration of the binder and conductive agent in the electrode active material slurry during drying is intensified, and thus the final electrode is manufactured unevenly. If the coating is done twice, such as thinly applying the active material layer followed by drying, and then applying it again followed by drying, to solve this problem, there is a disadvantage of taking a long time. In order to simultaneously improve electrode performance and productivity, a dual slot die coater with two slots is required so that two types of electrode active material slurry may be applied simultaneously and coated in a double layer of upper and lower layers.

The slot die coater forms slots on the coupling surfaces of the die blocks, so that three die blocks are basically required to have two slots as in a dual slot die coater. The process utilizing this dual slot die coater requires using the electrode active material slurry that is simultaneously discharged from different outlets communicating with each of the two slots, so that it is quite difficult to form each active material layer with the desired thickness.

Additionally, the separation distance from the outlet 7 to the surface of the current collector 3 is a coating gap, which is a very important variable in determining the coating quality of the active material layer. In general, the thickness of the active material layer is affected by the discharge amount of the electrode active material slurry through the outlet 7, the type of the electrode active material slurry, and this coating gap. Additionally, stable coating is possible only when the coating gap is uniform in the width direction (TD direction) of the current collector, and any deviation of the coating gap in the width direction will have a significant effect on the coating width and the boundary shape of the uncoated portion. The thickness of the active material layer should be managed very strictly because it seriously affects the coating quality even with its change of only a few µm, and in order to stably perform uniform coating in the width direction of the current collector, it should be managed very strictly to exhibit uniform dimensional accuracy in the width direction.

However, if the width of the slot die coater 1 is increased to use a long-width current collector for the increase of production, it becomes more difficult to perform uniform coating in the width direction, and thus precise control of the coating gap becomes more necessary. Additionally, as illustrated in FIG. 1, the coating roll 2 has a curvature, and the current collector 3 placed on it also has a curvature, so that the coating gap changes depending on the position. Specifically, when the center of the coating roll 2 and the outlet 7 are aligned in a row, the coating gap is minimum at the alignment position, and the coating gap increases as it deviates from the alignment position.

In particular, the coating process using a dual slot die coater requires the electrode active material slurry to be discharged and applied simultaneously from different outlets, so that coating gap management is more important. In addition, problems such as leaking and side rings are more serious than when forming a single layer. Among these, leaking refers to instability in which the coating solution is partially lost to the upstream side outside the die lip forming the tip of the die block. This means the loss of the pre-measured coating solution, which makes it impossible to predict the final coating thickness. Such leaking may cause the coating solution to remain for a long time and solidify, or cause a coating thickness deviation in the width direction. In particular, when the coating solution is discharged at high pressure in a state where the coating gap is lowered to several hundred µm for the purpose of thin film coating or to reduce the thickness deviation of the coating layer in the width direction, the aforementioned leaking may become more severe. In this way, the coating gap is also related to leaking and thus should be managed precisely.

### DISCLOSURE

### Technical Problem

The present disclosure is designed to solve the above-described problems, and therefore the present disclosure is directed to providing a slot die coater capable of precisely controlling a coating gap and suppressing the occurrence of leaking.

However, technical problems to be solved by the present disclosure are not limited to the above-described problems, and other problems not mentioned herein may be clearly understood by those having ordinary skill in the art from the following description of the present disclosure.

### Technical Solution

A slot die coater of the present disclosure for solving the above-described problem has a slot for discharging a coating solution in the opposite direction of gravity onto a surface of a substrate that is continuously driven and transferred by a coating roll, and the slot die coater includes a first die block; and a second die block forming the slot between the first die block and the second die block, wherein a center of rotation axis of the coating roll is positioned toward the second die block rather than an upper part of a first die lip forming a tip of the first die block with respect to the substrate.

The first die block is vertically installed integrally with a base at a rear part of an upper surface of the base, and the second die block is disposed on a front surface of the first die block.

The second die block may not be in surface contact with the base, or may form a bending space between the base and the second die block even if it is in surface contact with the base.

A bending unit may be connected to a lower end of the base to deform the bending space.

The position of the bending unit may be changeable by forming a hole formed in the base as a long hole in the front-back direction to fasten the bending unit and the base.

The center of rotation axis of the coating roll may be aligned with a bending center by the bending unit.

The slot die coater of the present disclosure may be implemented not only as a device for coating a single layer, but also as a dual slot die coater, which is a device for coating a double layer. To this end, the dual slot die coater of the present disclosure may further include a third die block disposed on a front surface of the second die block and forming an additional slot between the second die block and the third die block.

In this case, the center of rotation axis of the coating roll may be positioned in the middle of the first die lip, or in the lower part of the first die lip, or in the upper part of the second die lip forming the tip of the second die block, or in the middle of the second die lip, or in the lower part of the second die lip, or in the upper part of the third die lip forming the tip of the third die block.

In particular, in the dual slot die coater, the second die block may not be in surface contact with the base, or may form a bending space between the base and the second die block even if it is surface contact with the base, wherein a bending unit may be connected to a lower end of the base to deform the bending space, and by forming a hole formed in the base as a long hole in the front-back direction to fasten the bending unit and the base, the center of rotation axis of the coating roll may be aligned with a bending center by the bending unit.

At this time, the long hole may be formed to extend from behind the upper part of the first die lip to in front of the lower part of the third die lip.

Another slot die coater of the present disclosure for solving the above-described problem has a slot for discharging a coating solution in the opposite direction of gravity onto a surface of a substrate that is continuously driven and transferred by a coating roll, and the slot die coater includes a first die block vertically installed integrally with the base at the rear part of the upper surface of the base; a second die block forming the slot between the first die block and the second die block; and a bending unit connected to the lower end of the base, wherein the bending center by the bending unit is configured to move together when the center of rotation axis of the coating roll is changed with respect to the slot die coater.

The center of rotation axis of the coating roll may be positioned toward the second die block rather than an upper part of a first die lip forming a tip of the first die block with respect to the substrate.

The position of the bending unit may be changeable by forming a hole formed in the base as a long hole in the front-back direction to fasten the bending unit and the base.

The slot die coater may further include a third die block disposed on a front surface of the second die block and forming an additional slot between the second die block and the third die block.

The cross-section of the second die block may be a right triangle.

The first die block, the second die block and the third die block may have a first die lip, a second die lip and a third die lip forming the tip of each die, wherein the center of rotation axis of the coating roll may be positioned toward the second die block rather than the upper part of the first die lip with respect to the substrate, and the first die lip, the second die lip and the third die lip may be positioned on the same straight line, or the third die lip may be behind the first die lip or the second die lip.

In another example, the first die lip may be behind the second die lip or the third die lip, or the second die lip may be behind the first die lip or the third die lip, or the third die lip may be behind of the first die lip or the second die lip.

The thickness of the third die lip may be greater than the thickness of the first die lip and the thickness of the second die lip.

In another example, the thickness of the third die lip may be equal to the thickness of the first die lip and may be greater than the thickness of the second die lip.

### Advantageous Effects

According to the present disclosure, it is easy to adjust and maintain the distance between the die lip and the substrate, that is, the coating gap, to a desired degree.

According to the present disclosure, the center of rotation axis of the coating roll and the bending center may be aligned on any part of the die lip of the vertical die type slot die coater.

According to the present disclosure, by forming a hole for fastening the bending unit and the base as a long hole, the bending center may be moved as well when the vertical die alignment position is changed. According to the present disclosure, it is easy to change and align the position of the center of rotation axis of the coating roll and the bending center, and the coating gap is not easily changed during the process and is maintained, thereby suppressing the occurrence of coating gap deviation in the width direction perpendicular to the running direction of the substrate.

According to the present disclosure, the coating gap may be precisely maintained in consideration of the curvature of the coating roll. According to the present disclosure, there is an effect of uniformly controlling the coating amount and the resulting coating quality by maintaining a uniform (±2%) coating gap. Therefore, a uniform quality coating product, particularly an electrode for a secondary battery, may be obtained by using a slot die coater having a uniform coating gap.

According to the present disclosure, a space for bending may be secured in the slot die coater. Bending deforms where alignment should be made, and according to the present disclosure, deformation is performed with high uniformity even when using a bending unit for controlling coating uniformity in the width direction. As such, according to the present disclosure, the deformation of the die blocks may be controlled very uniformly, and thus, the coating uniformity is excellent and may be easily achieved, which is a great advantage.

The slot die coater of the present disclosure has an advantage that uniform coating may be applied even under high-speed running or long-width coating conditions when manufacturing an electrode of a secondary battery by applying an electrode active material slurry onto a current collector while driving the current collector.

In particular, according to the present disclosure, by moving the center of the rotation axis of the coating roll toward the second die block rather than the upper part of the first die lip, the effect of preventing back leak during coating is excellent. In particular, when applied with a dual slot die coater, the coating gap of the upper and lower layers may be made uniform, and the individual loading quality of the upper and lower layers may be secured.

Additionally, according to the present disclosure, the bending center is easy to move together, and thus the center of the rotation axis of the coating roll and the bending center are moved toward the second die block rather than the upper part of the first die lip, so that the pressing portion where the bending force is applied by the bending unit may be made to be the position with the smallest coating gap, thereby maintaining the bending effect (sensitivity).

In this way, by using the slot die coater according to the present disclosure, a coating layer, particularly an active material layer, may be uniformly formed to a desired thickness, and preferably, simultaneous coating of two types of electrode active material slurries is possible, so that there is an excellent effect in both performance and productivity.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic cross-sectional view of a slot die coater according to the prior art.
FIG. 2 is a schematic cross-sectional view of a slot die coater according to an embodiment of the present disclosure.
FIG. 3 is a schematic perspective view of the slot die coater of FIG. 2.
FIG. 4 is an exploded perspective view of FIG. 3.
FIG. 5 illustrates another embodiment of a shim that may be included in the slot die coater of FIG. 2.
FIG. 6 is a modified example of FIG. 3.
FIG. 7 illustrates a hole for fastening a bending unit and a base included in the slot die coater of FIG. 2.
FIG. 8 is a schematic cross-sectional view of a dual slot die coater according to another embodiment of the present disclosure.
FIGS. 9 and 10 are enlarged views of part A of FIG. 8.
FIG. 11 is a schematic cross-sectional view of a dual slot die coater according to a comparative example.
FIG. 12 is a graph simulating a coating gap by position when the center of the rotation axis of the coating roll is aligned with the upper part of the first die lip, as in the comparative example.
FIG. 13 is a graph simulating a coating gap by position when the center of the rotation axis of the coating roll is aligned with the lower part of the first die lip according to an embodiment of the present disclosure.
FIG. 14 is a graph simulating a coating gap by position when the center of the rotation axis of the coating roll is aligned with the upper part of the second die lip according to another embodiment of the present disclosure.
FIG. 15 illustrates the results of loading tests for a center part and a side part according to the bending level while changing only the alignment of the center of the rotation axis of the coating roll from the lower part of the first die lip to the upper part of the third die lip without moving the bending center.
FIG. 16 is a modified example of FIG. 8.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The slot die coater of the present disclosure is a device that has one or two slots for discharging a coating solution in the opposite direction of gravity and coats a coating solution on a substrate in a single layer or double layer. The 'substrate' described hereinbelow is a current collector, and the 'coating solution' is an electrode active material slurry. In the case of double-layer coating, both the first coating solution and the second coating solution are electrode active material slurries, which may mean electrode active material slurries having the same or different composition (types of active material, conductive agent, and binder), content (amount of active material, conductive agent, and binder), or physical properties. The slot die coater or dual slot die coater of the present disclosure is optimized for forming an electrode of a secondary battery. In particular, the dual slot die coater is optimized for manufacturing an electrode that is patterned by simultaneously applying two types of electrode active material slurries or alternately applying two types of electrode active material slurries. However, the scope of the rights of the present disclosure is not necessarily limited thereto. For example, the substrate may be a porous support constituting a separator, and the first coating solution and the second coating solution may be organic materials having different compositions or physical properties. That is, the substrate, the first coating solution, and the second coating solution may be any of them as long as a thin film coating is required.

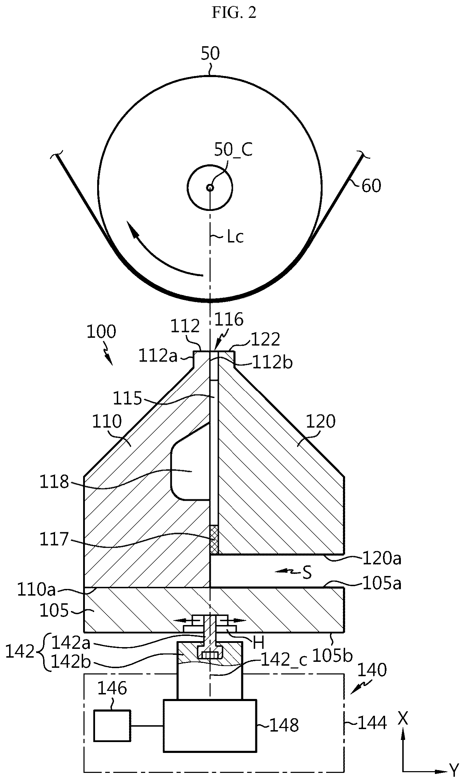

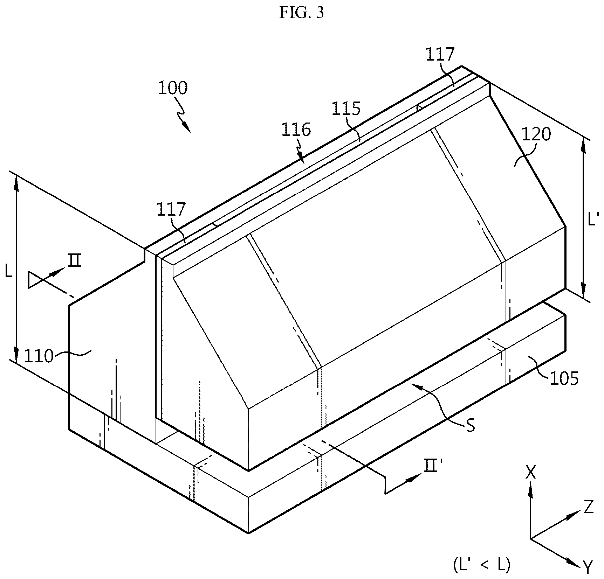

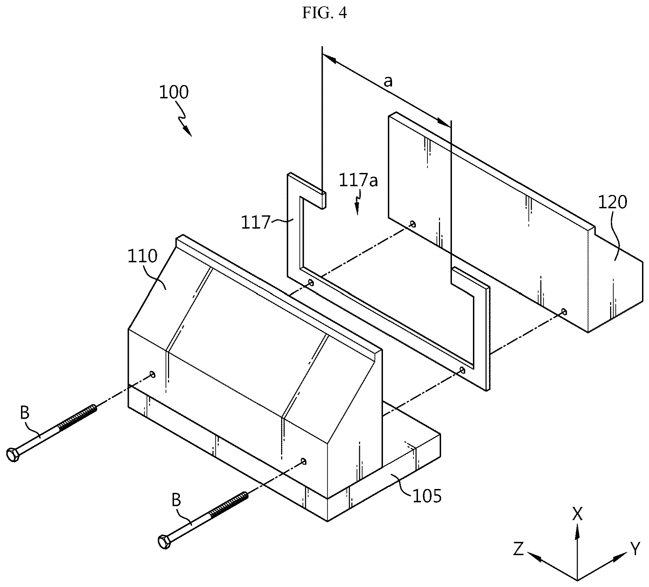

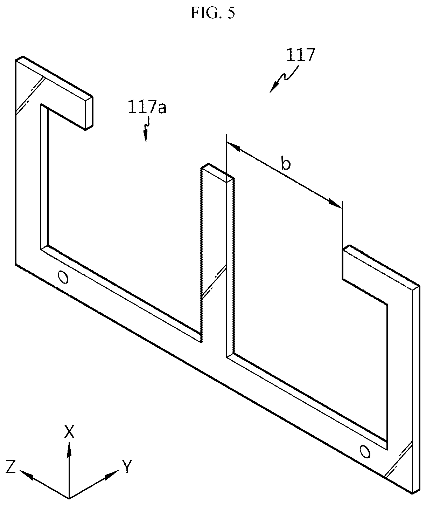

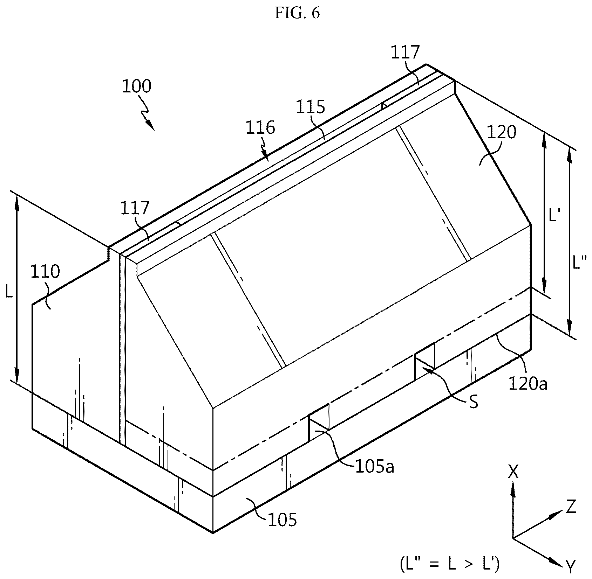

FIG. 2 is a schematic cross-sectional view of a slot die coater according to an embodiment of the present disclosure. FIG. 3 is a schematic perspective view of the slot die coater of FIG. 2, and FIG. 4 is an exploded perspective view of FIG. 3. FIG. 5 illustrates another embodiment of a shim that may be included in the slot die coater of FIG. 2. FIG. 6 is a modified example of FIG. 3. FIG. 2 may be a cross-sectional view taken along line II-II' of FIG. 3.

First, referring to FIGS. 2 and 3, the slot die coater 100 may have one slot 115 and discharge an electrode active material slurry through an outlet 116 communicating with the slot 115 to coat the electrode active material slurry on the surface of the substrate 60.

The slot die coater 100 has a slot 115 for discharging a coating solution, such as an electrode active material slurry, in the opposite direction of gravity onto the surface of the substrate 60 that is continuously driven and transferred by a coating roll 50. To this end, the slot die coater 100 includes a first die block 110 and a second die block 120. The second die block 120 forms a slot 115 between the first die block 110 and the second die block 120.

The slot die coater 100 is installed with the direction of discharging the coating solution (X direction) almost vertical (almost: ±5 degrees). In an embodiment of the present disclosure, the X-axis direction illustrated in the drawing refers to the direction in which the coating solution is discharged, the Z-axis direction refers to the width direction or TD direction of the slot die coater 100, and the Y-axis direction refers to the horizontal direction perpendicular to both the X-axis direction and the Z-axis direction. Additionally, the Y-axis direction refers to the front-back direction in the relationship between die blocks. In particular, the Y-axis direction refers to the direction from the first die block 110 toward the second die block 120. In the present specification, the direction from the first die block 110 toward the second die block 120 is defined as forward, and conversely, the direction from the second die block 120 toward the first die block 110 is defined as backward.

The first die block 110 and the second die block 120 have a first die lip 112 and a second die lip 122 that each forms tips thereof with respect to the substrate 60. The Y-axis direction also refers to the up-down direction with respect to the die lips. The direction from the first die lip 112 toward the second die lip 122 is defined as downward, and conversely, the direction from the second die lip 122 toward the first die lip 112 is defined as upward.

The substrate 60 is transferred by the coating roll 50, and the coating roll 50 may be disposed in the direction of discharging the coating solution from the slot die coater 100. The slot die coater 100 may discharge the coating solution in the opposite direction of gravity (X-axis direction), and may discharge the coating solution through the slot 115 to provide a continuous or discontinuous coating on the substrate 60.

The coating roll 50 rotates about the center of rotation axis 50_C. At this time, the center of rotation axis 50_C of the coating roll 50 is positioned toward the second die block 120 rather than the upper part 112a of the first die lip 112 with respect to the substrate 60. Here, the upper part 112a of the first die lip 112 refers to the left side of the first die lip 112 in the drawing. For reference, the lower part 112b of the first die lip 112 refers to the right side of the first die lip 112 in the drawing. Here, the description that the center of rotation axis 50_C of the coating roll 50 is positioned toward the second die block 120 rather than the upper part 112a of the first die lip 112 with respect to the substrate 60 means that the center of rotation axis 50_C of the coating roll 50 is actively moved away from the upper part 112a of the first die lip 112 and positioned toward the second die block 120 to further deviate from the range of error that inevitably occurs when aligning the center of rotation axis 50_C of the coating roll 50 to the upper part 112a of the first die lip 112 evenly.

For example, even if the center of rotation axis 50_C of the coating roll 50 is aligned evenly to the upper part 112a of the first die lip 112, it may be aligned within a position about 50 µm away back and forth. In the present disclosure, the center of rotation axis 50_C of the coating roll 50 may be positioned toward the lower part 112b of the first die lip 112, for example, toward the second die block 120 from a position about 100 µm away from the upper part 112a of the first die lip 112, rather than the upper part 112a of the first die lip 112.

Preferably, the first die block 110 is vertically installed integrally with the base 105 at the rear part of the upper surface 105a of the base 105. The surface opposite to the direction of discharging the coating solution from the first die block 110, that is, the lower surface 110a, is illustrated in FIG. 2, but this lower surface 110a may not be distinguished when the first die block 110 and the base 105 are installed integrally. The first die block 110 may have a triangular upper cross-section. The first die block 110 has a plate-like structure extending along the width direction. The first die block 110 is placed and assembled on the base 105, and if the base 105 and the first die block 110 are one piece in this way, alignment with respect to the base 105 is not necessary and they may be handled as one piece, thereby making handling convenient. The first die block 110 that is integral with the base 105 may also be called a body block. The XY cross-section of the first die block 110 may be viewed as approximately L-shaped.

At this time, the slot 115 may be perpendicular to the base 105.

The second die block 120 is disposed on the front surface of the first die block 110. The second die block 120 has a plate-like structure extending along the width direction. The second die block 120 may have a triangular upper cross-section.

The surfaces opposite to the direction of discharging the coating solution from the first die block 110 and the second die block 120, that is, the lower surfaces 110a, 120a, are placed almost horizontally (YZ plane). Since these die blocks 110, 120 have parts in which edges formed by the surfaces are formed at right angles, there are right-angled parts in the cross-section, and a vertical or horizontal plane may be used as a reference surface, thereby facilitating the manufacturing or handling and guaranteeing the precision. Additionally, when the first die block 110 and the second die block 120 are combined, the facing parts may be supported by each other with a high degree of surface contact, and thus the fastening fixing and maintenance are very excellent. In addition, the combination of the first die block 110 and the second die block 120 has an overall roughly cuboidal shape, and only the upper part from which the coating solution is discharged has an oblique shape toward the substrate 60. The first die block 110 and the second die block 120 are made of, for example, SUS material. Materials that are easy to process, such as SUS420J2, SUS630, SUS440C, SUS304, and SUS316L, may be used. SUS is advantageous in that it is easy to process, is inexpensive, has high corrosion resistance, and may be able to be manufactured into a desired shape at low cost.

A shim 117 forming a slot 115 may be provided between the first die block 110 and the second die block 120. A gap by the shim 117 between the first die block 110 and the second die block 120 may be provided, thereby forming a slot 115 corresponding to a passage through which the coating solution may flow. In this case, the thickness of the shim 117 determines the upper and lower width (slot gap) of the slot 115.

As can be seen in FIG. 4, the shim 117 may have at least one region cut to provide an opening 117a. At this time, the shim 117 may have multiple openings 117a by intermittently cutting the one region, as illustrated in FIG. 5.

The shim 117 is preferably made of a material having sealing properties, as it also acts as a gasket for preventing the coating solution from leaking into the gap between the first die block 110 and the second die block 120, except for the region where the outlet 116 is formed.

Referring to FIG. 2, the first die block 110 may include a manifold 118 that accommodates the coating solution and communicates with the slot 115. The manifold 118 may be provided in the second die block 120. The manifold 118 may have a predetermined shape and depth. Although not illustrated in the drawing, this manifold 118 is connected to a coating solution supply chamber (not shown) installed externally through a supply pipe to receive the coating solution. When the manifold 118 is full of the coating solution, the coating solution is induced to flow along the slot 115 and discharged to the outside through the outlet 116.

The shim 117 is provided between the first die block 110 and the second die block 120 to define the shape of the slot 115. The slot die coater 100 discharges and applies the coating solution onto the substrate 60 through the outlet 116 communicating with the slot 115. The coating width of the coating layer coated on the substrate 60 is determined by the width of the slot 115. When it is necessary to change the coating width, various coating widths may be implemented by changing the shim 117 that determines the internal space of the manifold 118 and the width of the slot 115.

The shim 117 is interposed in the remaining part except for one side of the edge region of the opposing surfaces of each of the first die block 110 and the second die block 120. For example, in order to form an active material layer with a coating width of (a) on the substrate 60 and to form an uncoated portion on both sides of the active material layer, the width of the opening 117a of the shim 117 may be designed to be (a), as shown in FIG. 4. The shim 117 of FIG. 5 illustrates an example in which the width of the opening 117a of the shim 117 is designed to be (b), in order to form multiple active material layers with a coating width of (b) on the substrate 60 and to form uncoated portions on both sides of each active material layer. When applying this shim 117, a coating layer in the shape of a stripe pattern is formed on the substrate 60.

As illustrated in FIG. 2, the coating roll 50 may rotate clockwise about the horizontal center of rotation axis 50_C. The substrate 60 may travel along the lower circumferential surface of the coating roll 50 in the front-back direction (right to left, i.e., upstream to downstream).

The second die block 120 is not in surface contact with the base 105 as in FIGS. 2 to 4, so that a bending space S may be provided between the lower surface of the second die block 120 and the upper surface of the base 105. Alternatively, even if the second die block 120 is in surface contact with the base 105 as in FIG. 6, a bending space S may be formed between the base 105 and the second die block 120.

In the examples illustrated in FIGS. 2 to 4, the second die block 120 is formed to have a smaller length than the first die block 110, so that the second die block 120 is not in surface contact with the base 105, and a bending space S is formed between the lower surface 120a of the second die block 120 and the upper surface 105a of the base 105. If the length of the first die block 110 is L and the length of the second die block 120 is L', then there is a relationship of L > L'. In this bending space S, a front surface is open and a rear surface is formed in the front surface of the first die block 110, and both left and right sides are open in the width direction.

In the example illustrated in FIG. 6, the length L of the first die block 110 and the length L" of the second die block 120 are equal to each other. Instead, the lower surface 120a of the second die block 120 has an uneven structure so that the lower surface 120a of the second die block 120 is intermittently in surface contact with the upper surface 105a of the base 105. The length of the second die block 120 at the contacting part may be L", and the length of the second die block 120 at the non-contacting part may be L' (L" = L > L'). In the example illustrated in FIG. 6, the lower surface 120a of the second die block 120 is in surface contact with the upper surface 105a of the base 105, so that the force with which the base 105 supports the second die block 120 increases. In the part where the lower surface 120a is not in surface contact with the upper surface 105a of the base 105, a bending space S is provided. A stress relief effect by this bending space S may be expected.

As illustrated in FIG. 4, the first die block 110 and the second die block 120 may be fastened by a coupling bolt B. When the internal pressure of the die blocks 110, 120 increases by the discharge of the coating solution, a torque due to the internal pressure may be generated starting from the coupling bolt B, and as a result, the part farthest from the coupling bolt B receives the greatest force, thereby causing a gap between the first die lip 112 and the second die lip 122 to be wider. As illustrated in FIG. 6, if the lower surface 120a of the second die block 120 is in surface contact with the upper surface 105a of the base 105, the contacting surfaces of the first die block 110 and the second die block 120 may be supported even if a torque due to the internal pressure of the slot die coater 100 is generated.

And, in terms of the assembly process of the die blocks, the lower surface 120a of the second die block 120 may be placed on the base 105 so as to be in surface contact with the upper surface 105a of the base 105, and bolts (not shown) may be fastened from the bottom of the base 105 to the second die block 120 at each of the contacting positions. In this way, when fastening the previously contacting positions with bolts and grinding the first die lip 112 and the second die lip 122 at the same time, there is an effect of allowing each die lip to be aligned on the same straight line only by fastening the contacting positions with bolts.

Referring to FIG. 2, a bending unit 140 may be connected to the lower end of the base 105. The bending unit 140 may be fastened to a hole H formed at the lower end of the base 105. The bending unit 140 may deform the bending space S by pressing the lower surface 105b of the base 105.

The bending unit 140 may include a die connecting portion 142 fastened to the lower surface 105b of the base 105 to press the base 105. The die connecting portion 142 may include a die fastening portion 142a and a body fastening portion 142b. If a hole H formed in the base 105 to fasten the bending unit 140 to the base 105 is formed as a long hole in the front-back direction, the position of the bending unit 140 may be changed in the front-back direction (see the two-way arrow) by changing the position of the die connecting portion 142 connected thereto.

Since the bending effect changes depending on the change of the center of rotation axis 50_C of the coating roll 50 in the front-back direction, it is preferable that the position of the bending center 142_C changes together with the center of rotation axis 50_C of the coating roll 50. The bending center 142_C may refer to the center of the die connecting portion 142. The bending center 142_C may be positioned at the center part in the width direction of the slot die coater 100.

As illustrated in FIG. 2, it is preferable that the center of rotation axis 50_C of the coating roll 50 and the bending center 142_C are aligned with each other. Therefore, the bending center 142_C may coincide with the center of rotation axis 50_C of the coating roll 50 in the front-back direction of the slot die coater 100.

The bending unit 140 may include a servo motor 146 inside the body 144. The servo motor 146 may be connected to a moving portion 148 of the bending unit 140. The moving portion 148 of the bending unit 140 is connected to the die connecting portion 142. The moving portion 148 may move in the X-axis direction and the -X-axis direction by the rotation of the servo motor 146, and the die connecting portion 142 connected thereto may press or pull the base 105 accordingly.

The pressing portion where the bending force is applied by the bending unit 140 may be made to be the position with the smallest coating gap. If the pressing portion is the bending center 142_C, which coincides with the center of rotation axis 50_C of the coating roll 50, the bending effect (sensitivity) may be maintained.

In FIG. 2, the center of rotation axis 50_C of the coating roll 50 is shown to be moved toward the second die block 120 rather than the upper part 112a of the first die lip 112, for example, to be aligned with the lower part 112b of the first die lip 112.

When the center of rotation axis 50_C of the coating roll 50 and the lower part 112b of the first die lip 112 are aligned in a row, the coating gap is minimum at the alignment position, and the coating gap increases as it moves away from the alignment position, that is, in the front-back direction of the slot die coater 100.

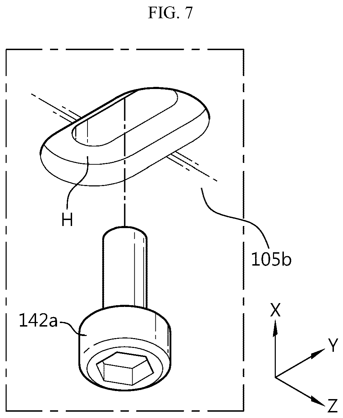

The position of the bending unit 140 may be determined so that when the vertical line Lc from the center of rotation axis 50_C of the coating roll 50 passes through the lower part 112b of the first die lip 112, it also passes through the bending center 142_C. To this end, as shown in detail in FIG. 7, the present disclosure provides a hole H for fastening the bending unit 140 and the base 105 as a long hole so that the bending center 142_C may move as well when the vertical die alignment position changes.

FIG. 7 illustrates a hole for fastening a bending unit and a base included in the slot die coater of FIG. 2.

In an embodiment of the present disclosure, it is proposed to form the hole H for fastening the bending unit 140 and the base 105 as a long hole. The long hole is formed in a shape extending along the front-back direction. A die fastening portion 142a is fastened to this long hole H, and a body fastening portion 142b is connected thereto, so that the die connecting portion 142 is fastened to the base 105. When the die fastening portion 142a is fastened to the long hole H, the position may be changed according to the front-back direction, so that the die connecting portion 142 connected thereto may be fastened at different positions along the front-back direction.

That is, the hole H for fastening the bending unit 140 and the base 105 is formed as a long hole, so that the position of the bending unit 140 fastened thereto may be movable. The position of the bending unit 140 may be positioned at the center part of the base 105 in the front-back direction, or may be placed closer to the second die block 120 than the first die block 110 as necessary. The closer the part is to the bending unit 140, the greater the force may be applied to the part, and the greater the bending effect may be. The bending unit 140 may push the base 105 toward the discharge direction or pull the base 105 in a direction opposite to the discharge direction. The bending unit 140 may bend the base 105 by pushing or pulling the base 105. The bending space S may be deformed. When the base 105 is bent, not only the first die block 110 formed integrally with the base 105, but also the second die block 120 fastened and connected to the first die block 110 by a bolt B may be bent at the same time.

Preferably, the center of rotation axis 50_C of the coating roll 50 is moved toward the second die block 120 rather than the upper part 112a of the first die lip 112. For example, the center of rotation axis 50_C of the coating roll 50 is not aligned with the upper part 112a of the first die lip 112, but is changed to lower parts compared thereto, for example, the middle part of the first die lip 112, or the lower part 112b of the first die block 110, or another part such as the second die block 120. And, the bending center 142_C is also changed to a position aligned therewith. Through this, a stable coating bead may be formed.

If the center of rotation axis 50_C of the coating roll 50 is aligned with the upper part 112a of the first die lip 112, a problem where the coating gap varies in the front-back direction of the slot die coater 100 due to the curvature of the coating roll 50 is severe, which may adversely affect the coating quality. This will be described in detail later in the comparative example below.

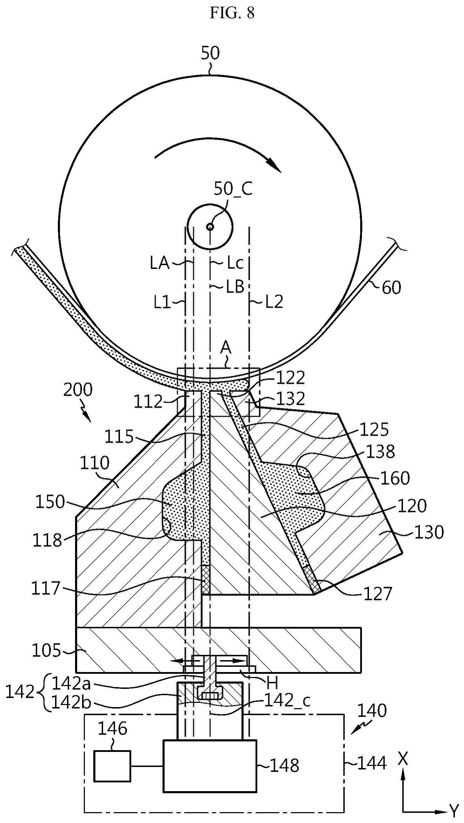

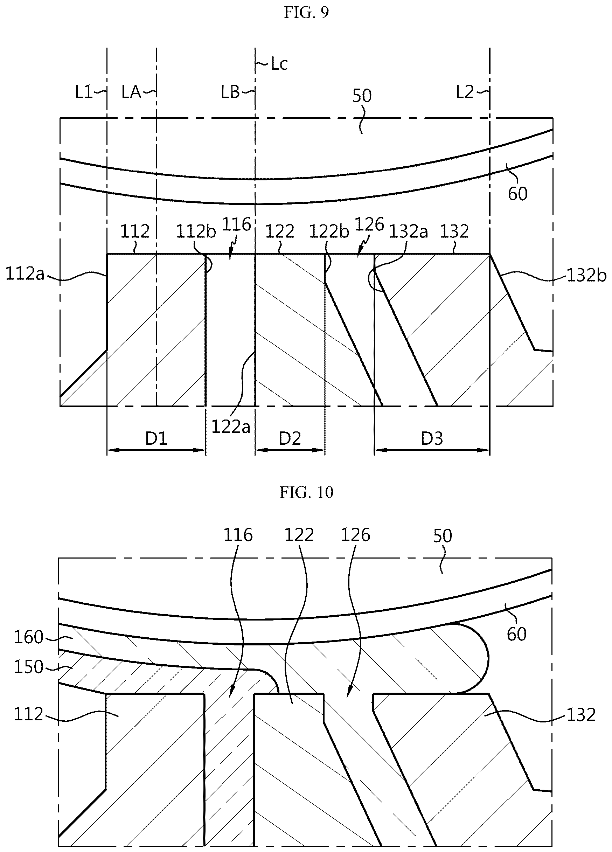

FIG. 8 is a schematic cross-sectional view of a dual slot die coater according to another embodiment of the present disclosure. FIGS. 9 and 10 are enlarged views of part A of FIG. 8.

First, referring to FIG. 8, the dual slot die coater 200 has one more slot compared to the slot die coater 100 of FIG. 2.

To this end, the dual slot die coater 200 further includes a third die block 130 that is disposed on a front surface of the second die block 120 to form an additional slot 125 between the second die block 120 and the third die block 130. For convenience, the slot 115 between the first die block 110 and the second die block 120 will be referred to as the first slot 115, and the additional slot 125 between the second die block 120 and the third die block 130 will be referred to as the second slot 125.

The dual slot die coater 200 may extrude and coat a coating solution, such as an electrode active material slurry, on the surface of a continuously moving substrate 60 through at least one of the first slot 115 and the second slot 125. The dual slot die coater 200 may discharge the coating solution in the opposite direction of gravity, and may discharge two types of coating solutions, which are identical or different, through the first slot 115 and the second slot 125 to provide coating on the substrate 60 simultaneously or alternately.

In the dual slot die coater 200, the first die block 110 may be referred to as an upper die, the second die block 120 may be referred to as a middle die or an inner die, and the third die block 130 may be referred to as a lower die or an outer die.

The second die block 120 of the present embodiment illustrated in FIG. 8 has a right triangular cross-section, but is not necessarily limited to this form, and for example, the cross-section may be formed as an isosceles triangle. When the cross-section is a right triangle, the first slot 115 is aligned almost perpendicular to the substrate 60, thereby facilitating control of the coating solution discharge through the first slot 115.

The third die block 130 may have a triangular upper cross-section. The third die block 130 also has a plate-like structure extending along the width direction. The third die block 130 has a third die lip 132 forming its tip with respect to the substrate 60.

A shim 127 may also be provided between the second die block 120 and the third die block 130. The shim 117 provided between the first die block 110 and the second die block 120 may be referred to as the upper shim 117, and the shim 127 provided between the second die block 120 and the third die block 130 may be referred to as the lower shim 127. The upper shim 117 and the lower shim 127 may be the same.

Here, the lower surface of the second die block 120 and the lower surface of the third die block 130 are not in surface contact with the base 105, so that a bending space S may be provided between them and the upper surface of the base 105. Alternatively, even if the lower surface of the second die block 120 and the lower surface of the third die block 130 are configured as described with reference to FIG. 6 to be in surface contact with the base 105, a bending space S may be formed between them and the base 105. It has been described that the first die block 110 includes a manifold 118 accommodating a coating solution and communicating with the first slot 115. The third die block 130 may include a manifold 138 accommodating a coating solution that is the same as or different from the above coating solution and communicating with the second slot 125. For convenience, the manifold 118 formed in the first die block 110 may be referred to as the upper-layer manifold 118, and the manifold 138 formed in the third die block 130 may be referred to as the lower-layer manifold 138. The coating solution accommodated in the upper-layer manifold 118 may be referred to as the first coating solution 150, and the coating solution accommodated in the lower-layer manifold 138 may be referred to as the second coating solution 160. In this way, the manifolds 118, 138 are formed in the first die block 110 and the third die block 130, respectively. By doing so, the deformation of the second die block 120, which is the most structurally vulnerable, may be less affected. In addition, by dividing the second die block 120 into a left die (back) and a right die (front), and then configuring the left die to move integrally with the first die block 110 and the right die to move integrally with the third die block 130, a structure in which the left die block and the right die block are slidable at the interface of the left die and the right die may be implemented, which makes it possible to implement a structure in which the positional change of the first slot 115 and the second slot 125 becomes easier.

Referring to FIGS. 9 and 10, a first outlet 116 communicating with the first slot 115 is formed between the first die lip 112 and the second die lip 122, and a second outlet 126 communicating with the second slot 125 is formed between the second die lip 122 and the third die lip 132. The second outlet 126 discharges the second coating solution 160 accommodated in the lower manifold 138 shown in FIG. 8 onto the substrate 60, and the first outlet 116 is positioned to be spaced apart from the second outlet 126 toward the downstream side of the coating direction and discharges the first coating solution 150 accommodated in the upper manifold 118 shown in FIG. 8 onto the substrate 60. That is, the first outlet 116 may be used to form the upper layer and the second outlet 126 may be used to form the lower layer, resulting in a double layer coating.

In this way, while disposing the coating roll 50 provided to be rotatable in the discharge direction of the dual slot die coater 200, and driving the substrate 60 to be coated by rotating the coating roll 50, the first coating solution 150 that is the first electrode active material slurry and the second coating solution 160 that is the second electrode active material slurry are continuously brought into contact with the surface of the substrate 60, so that a two-layer structure may be simultaneously coated on the substrate 60. The second coating solution 160 is first coated on the substrate 60 to form a lower slurry layer, and almost simultaneously, the first coating solution is coated on top of the lower slurry layer to form an upper slurry layer.

In the present embodiment, the center of rotation axis 50_C of the coating roll 50 is moved toward the second die block 120 rather than the upper part 112a of the first die lip 112.

In FIGS. 8 and 9, as the first reference line L1, a vertical line at the center of rotation axis 50_C of the coating roll 50 is shown to be aligned with the upper part 112a of the first die lip 112. In the present embodiment, the vertical line Lc at center of rotation axis 50_C of the coating roll 50 may be aligned to be positioned on the right side of this first reference line L1, that is, forward.

In FIGS. 8 and 9, as the second reference line L2, a vertical line at the center of rotation axis 50_C of the coating roll 50 is shown to be aligned with the lower part 132b of the third die lip 132. In the present embodiment, the vertical line Lc at the at the center of rotation axis 50_C of the coating roll 50 may be aligned to be positioned on the left side of this second reference line L2, that is, rearward.

For example, the center of rotation axis 50_C of the coating roll 50 may be aligned with the middle part (between reference numerals 112a and 112b) of the first die lip 112 to be at the LA position. The vertical line Lc at the center of rotation axis 50_C of the coating roll 50 passes through the middle part of the first die lip 112.

In another example, the center of rotation axis 50_C of the coating roll 50 may be aligned with the upper part 122a of the second die lip 122 to be at the LB position. The vertical line Lc at the center of rotation axis 50_C of the coating roll 50 passes through the upper part 122a of the second die lip 122.

In still another example, the center of rotation axis 50_C of the coating roll 50 may be aligned with the lower part 112b of the first die lip 112. The vertical line Lc at the center of rotation axis 50_C of the coating roll 50 passes through the lower part 112b of the first die lip 112.

In still another example, the center of rotation axis 50_C of the coating roll 50 may be aligned at a point 1 mm away from the lower part 112b of the first die lip 112 toward the second die lip 122. The position of the second die lip 122 may change depending on the thickness of the upper-layer shim 117. The point 1 mm away from the lower part 112b of the first die lip 122 toward the second die lip 122 may be the upper part 122a of the second die lip 122, that is, the LB position, when the upper-layer shim 117 is 1 mm thick.

In still another example, the center of rotation axis 50_C of the coating roll 50 may be positioned in the middle (between reference numerals 122a and 122b) of the second die lip 122, at the lower part 122b of the second die lip 122, or at the upper part 132a of the third die lip 132.

At this time, since the bending effect changes according to the change in the center of rotation axis 50_C of the coating roll 50, it is preferable that the position of the bending center 142_C changes as well. Therefore, preferably, the center of rotation axis 50_C of the coating roll 50 and the bending center 142_C are aligned with each other.

For example, the position of the bending unit 140 is determined so that when the vertical line Lc at the center of rotation axis 50_C of the coating roll 50 passes through the middle part of the first die lip 112, it also passes through the bending center 142_C. That is, when the center of rotation axis 50_C of the coating roll 50 is aligned with the middle part of the first die lip 112 to be at the LA position, the position of the bending unit 140 is changed so that the bending center 142_C is also placed at the LA position.

Likewise, the position of the bending unit 140 is determined so that when the vertical line Lc at the center of rotation axis 50_C of the coating roll 50 passes through the upper part 122a of the second die lip 122, it also passes through the bending center 142_C. That is, when the center of rotation axis 50_C of the coating roll 50 is aligned with the upper part 122a of the second die lip 122 to be at the LB position, the position of the bending unit 140 is changed so that the bending center 142_C is also placed at the LB position.

To this end, the present disclosure has described that the hole H for fastening the bending unit 140 and the base 105 is formed as a long hole as shown in FIG. 7 so that the bending center 142_C may move as well when the vertical die alignment position changes.

Since the hole H for fastening the bending unit 140 and the base 105 is a long hole, the position of the bending unit 140 fastened thereto may be movable in the front-back direction (see the two-way arrow). The position of the bending unit 140 may be positioned at the center part of the base 105, and may be placed closer to the second die block 120 or closer to the third die block 130 as necessary. The closer the part is to the bending unit 140, the greater the force may be applied to the part, and the greater the bending effect may be. The bending unit 140 may push the base 105 toward the discharge direction or pull the base 105 in a direction opposite to the discharge direction.

Preferably, in the dual slot die coater 200, the center of rotation axis 50_C of the coating roll 50 is aligned so as to be moved toward the second die block 120 rather than the upper part 112a of the first die lip 112. For example, the center of rotation axis 50_C of the coating roll 50 is not aligned with the upper part 112a of the first die lip 112, that is, the upper part of the first die block 110, but is changed to the lower part of the first die block 110 or another part. And, the bending center 142_C is also changed to a position aligned therewith. Through this, a stable coating bead may be formed.

### Comparative example

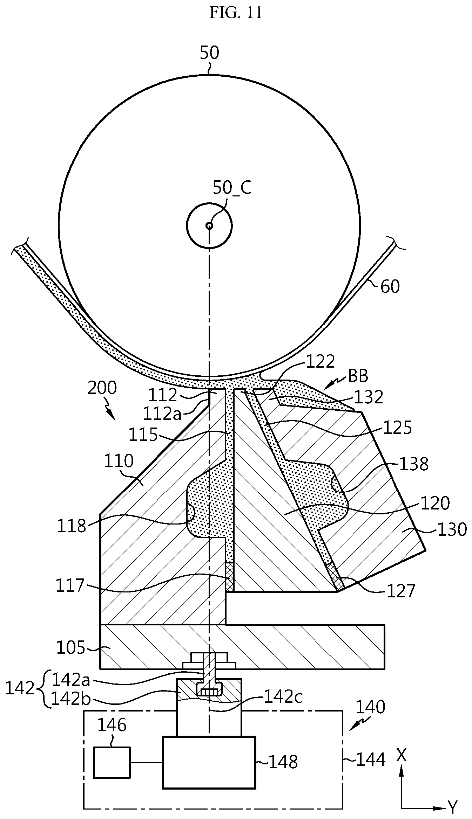

FIG. 11 is a schematic cross-sectional view of a dual slot die coater according to a comparative example.

Referring to FIG. 11, in the comparative example, the center of rotation axis 50_C of the coating roll 50 and the bending center 142_C are aligned with the upper part 112a of the first die lip 112, which is a 'first die block upper part' alignment method. In this case, the coating gap becomes excessively large at the rear bead BB, which may cause a problem that the coating bead is not stably formed and the coating bead becomes unstable, resulting in a back leak that bursts backward.

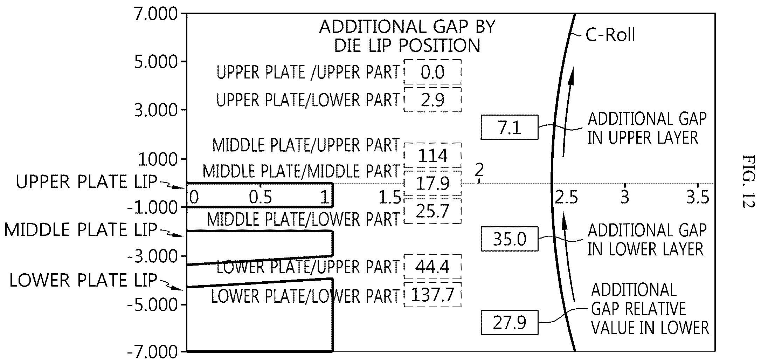

FIG. 12 is a graph simulating a coating gap by position when the center of the rotation axis 50_C of the coating roll is aligned with the upper part 112a of the first die lip 112, as in the comparative example. It is assumed that the thickness of the shims 117, 127 is 1 mm and the diameter of the coating roll 50 is 350 mm.

In FIG. 12, the vertical axis represents the physical thickness and spacing of the die lip (denoted as upper plate LIP, middle plate LIP, and lower plate LIP), and the unit is mm. The left side of the upper plate LIP is positioned at the vertical axis 0, indicating alignment with the upper part 112a of the first die lip 112. In FIG. 12, the horizontal axis represents the spacing between the die lip and the coating roll (denoted as C-Roll), and the unit is mm. The end of the die lip is at position 1 of the horizontal axis, and the outer circumference of the coating roll at the center of the rotation axis 50_C of the coating roll is at position 2.5. Therefore, the spacing set for calculation is 1.5 mm for the coating gap. An additional gap is shown for each die lip position in FIG. 12. The additional gap is an increased value compared to the set coating gap of 1.5 mm.

The upper plate/upper part refers to the upper part 112a of the first die lip 112. Since the center of rotation axis 50_C of the coating roll is positioned at the corresponding position, the additional gap compared to the set coating gap is 0.0. The upper plate/lower plate is an additional gap at the lower part 112b of the first die lip 112, and was calculated to be 2.9 µm. The middle plate/upper part is an additional gap at the upper part 122a of the second die lip 122, and was calculated to be 11.4 µm. The middle plate/middle part is an additional gap at the midpoint between the upper part 122a and the lower part 122b of the second die lip 122, and was calculated to be 17.9 µm. The middle plate/lower part is an additional gap at the lower part 122b of the second die lip 122, and was calculated to be 25.7 µm. The lower plate/upper part is an additional gap at the upper part 132a of the third die lip 132, and was calculated to be 44.4 µm. The lower plate/lower part is an additional gap at the lower part 132b of the third die lip 132, and was calculated to be 137.7 µm. In this way, the additional gap increases as the center of rotation axis 50_C of the coating roll deviates from its position.

The additional gap in the upper layer was calculated to be 7.1 µm by averaging the additional gap of 2.9 µm at the upper plate/lower part and the additional gap of 11.4 µm at the middle plate/upper part, and the additional gap in the lower layer was calculated to be 35.0 µm by averaging the additional gap of 25.7 µm at the middle plate/lower part and the additional gap of 44.4 µm at the lower plate/upper part. Since the center of rotation axis 50_C of the coating roll is biased toward the first die block 110 by aligning with the upper part 112a of the first die lip 112, it can be seen that an additional coating gap of 27.9 µm (additional gap relative value in the lower layer) is further generated in the lower part due to the curvature of the coating roll 50.

In this way, when the center of rotation axis 50_C of the coating roll 50 is aligned with the upper part 112a of the first die lip 112, a problem in which the coating gap varies greatly in the front-back direction of the slot die coater 100 due to the curvature of the coating roll 50 occurs, and it can be seen that the coating gap increase is more severe particularly in the lower part than in the upper part.

In particular, in the case of the dual slot die coater 200, the upper part of the first die block 110 and the rear bead BB position in the alignment position are farther apart than in the single layer slot die coater 100, which causes the coating gap at the rear bead BB position to be larger, thereby making the upper alignment double layer coating of the first die block 110 particularly vulnerable to back leak.

### Embodiment

In the present disclosure, the center of rotation axis 50_C of the coating roll 50 is moved toward the second die block 120 rather than the upper part 112a of the first die lip 112, thereby preventing back leak.

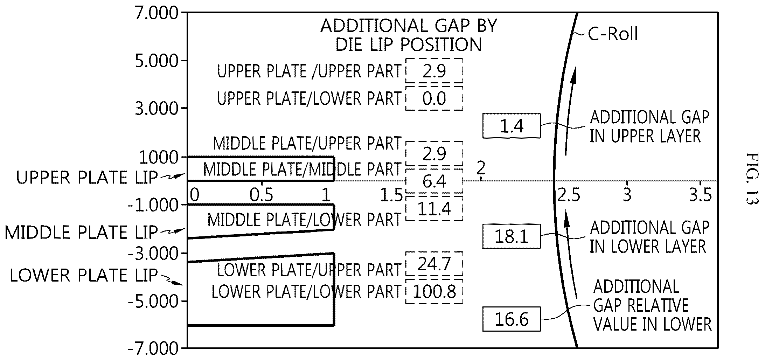

FIG. 13 is a graph simulating a coating gap by position when the center of the rotation axis 50_C of the coating roll 50 is aligned with the lower part 112b of the first die lip 112 according to an embodiment of the present disclosure. As in the comparative example, it is assumed that the thickness of the shims 117, 127 is 1 mm and the diameter of the coating roll 50 is 350 mm.

As shown in FIG. 13, the additional gap for each die lip position compared with the comparative example is as follows. Since the center of the rotation axis 50_C of the coating roll is positioned at the upper plate/lower part, the additional gap compared to the set coating gap is 0.0. The upper plate/upper part deviates from the center of the rotation axis 50_C of the coating roll, so the additional gap was calculated to be 2.9 µm. The additional gap at the middle plate/upper part was calculated to be 2.9 µm, the additional gap at the middle plate/middle part was calculated to be 6.4 µm, the additional gap at the middle plate/lower part was calculated to be 11.4 µm, the additional gap at the lower plate/upper part was calculated to be 24.7 µm, and the additional gap at the lower plate/lower part was calculated to be 100.8 µm. Likewise, the additional gap increases as the center of rotation axis 50_C of the coating roll deviates from its position, but in the present embodiment, the additional gap for each die lip position is significantly smaller than in the comparative example. Therefore, the rear bead is not as far away as in the comparative example, which improves the back leak.

Additionally, the additional gap in the upper layer was calculated to be 1.4 µm, and the additional gap in the lower layer was calculated to be 18.1 µm. Even if a coating gap is generated in the lower layer due to the curvature of the coating roll 50 while the center of rotation axis 50_C of the coating roll is not aligned with the upper part 112a of the first die lip 112 and is slightly closer toward the second die block 120, it can be seen that a coating gap of 16.6 µm, which is much smaller than in the comparative example, is generated. Therefore, the coating conditions of the upper and lower layers become more similar, and thus the quality control of the coating layer is more reliable. By reducing the difference in the coating gap between the upper and lower layers, the individual loading quality of the upper and lower layers may be secured.

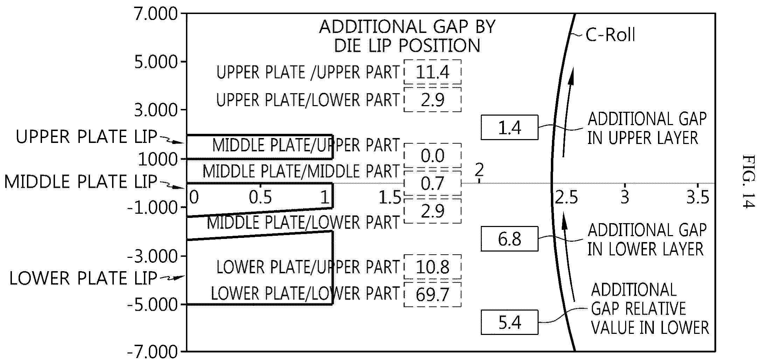

FIG. 14 is a graph simulating a coating gap by position when the center of the rotation axis 50_C of the coating roll is aligned with the upper part 122a of the second die lip 122 according to another embodiment of the present disclosure.

Referring to FIG. 14, the additional gap for each die lip position compared with the comparative example is as follows. Since the center of rotation axis 50_C of the coating roll is positioned at the middle plate/upper part, the additional gap compared to the set coating gap is 0.0. The upper plate/upper part and the upper plate/lower part deviate from the center of rotation axis 50_C of the coating roll, so the additional gaps were calculated to be 11.4 µm and 2.9 µm, respectively. The additional gap at the middle plate/middle part was calculated to be 0.7 µm, the additional gap at the middle plate/lower part was calculated to be 2.9 µm, the additional gap at the lower plate/upper part was calculated to be 10.8 µm, and the additional gap at the lower plate/lower part was calculated to be 69.7 µm. Likewise, the additional gap increases as the center of rotation axis 50_C of the coating roll deviates from its position, but in the present embodiment, the additional gap for each die lip position is significantly smaller than in the comparative example. Therefore, the rear bead is not as far away as in the comparative example, which greatly improves the back leak.

Additionally, according to FIG. 14, the additional gap in the upper layer was calculated to be 1.4 µm, and the additional gap in the lower layer was calculated to be 6.8 µm. Even if a coating gap is generated in the lower layer due to the curvature of the coating roll 50 while the center of rotation axis 50_C of the coating roll is not aligned with the upper part 112a of the first die lip 112 and is much closer toward the second die block 120, it can be seen that a coating gap of 5.4 µm, which is much smaller than in the comparative example or an embodiment of the present disclosure, is generated, and this is equivalent to no difference in the coating gap. Therefore, by making the coating gap between the upper and lower layers uniform, the individual loading quality of the upper and lower layers may be secured.

As mentioned above, since the bending effect changes according to the change in the center of the rotation axis 50_C of the coating roll 50, it is preferable to change the position of the bending center 142_C as well. If the hole H fastening the bending unit 140 and the base 105 is formed in a circular shape, the position of the bending unit 140 is fixed. However, when the hole H fastening the bending unit 140 and the base 105 is formed as a long hole as proposed in the present disclosure, the bending unit 140 may be repositioned along the front-back direction to coincide with the center of the rotation axis 50_C of the coating roll 50.

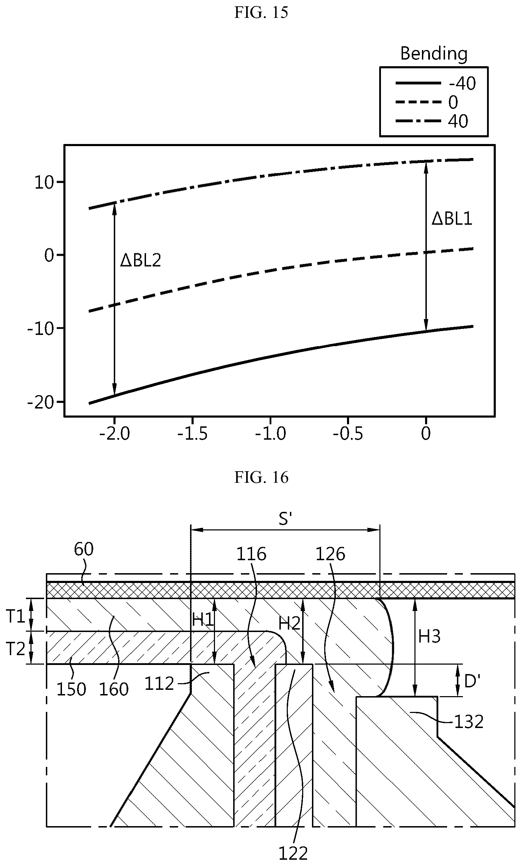

FIG. 15 illustrates the results of loading tests for a center part and a side part according to the bending level (-40 µm to 40 µm) while changing only the alignment of the center of the rotation axis 50_C of the coating roll 50 from the lower part 112b of the first die lip 112 to the upper part 132a of the third die lip 132 without moving the bending center 142_C. The bending center 142_C was aligned with and fixed to the lower part 112b of the first die lip 112 and was not moved.

In FIG. 15, the horizontal axis represents the center of the rotation axis 50_C of the coating roll 50, and the unit is an arbitrary unit. When the center of the rotation axis 50_C of the coating roll 50 is aligned with the lower part 112b of the first die lip 112, the value of the horizontal axis is 0. As the center of the rotation axis 50_C of the coating roll 50 moves toward the upper part 132a of the third die lip 132, the horizontal axis has a negative value.

In FIG. 15, the vertical axis represents the loading difference between the center part and the side part of the coating layer, and the unit is an arbitrary unit. The larger the center part loading, the more positive the value.

The bending level of -40 µm is a condition when the bending space S is pressed by pushing the base 105 by a certain amount, the bending level of 0 is a condition when no bending is performed, and the bending level of 40 µm is a condition when the bending space S is increased by pulling the base 105 by a certain amount.

If the bending level is 40 µm when the center of the rotation axis 50_C of the coating roll 50 is aligned with the lower part 112b of the first die lip 112, the loading difference between the center part and the side part is about 10, and as the center of the rotation axis 50_C of the coating roll 50 moves toward the upper part 132a of the third die lip 132, the loading difference between the center part and the side part gradually decreases. If the bending level is 0 µm when the center of the rotation axis 50_C of the coating roll 50 is aligned with the lower part 112b of the first die lip 112, the loading difference between the center part and the side part is almost zero, and as the center of the rotation axis 50_C of the coating roll 50 moves toward the upper part 132a of the third die lip 132, the loading difference between the center part and the side part becomes increasingly negative. If the bending level is -40 µm when the center of the rotation axis 50_C of the coating roll 50 is aligned with the lower part 112b of the first die lip 112, the loading difference between the center part and the side part is about -10, and as the center of the rotation axis 50_C of the coating roll 50 moves toward the upper part 132a of the third die lip 132, the loading difference between the center part and the side part becomes more increasingly negative.

However, the loading difference ΔBL1 for each bending level when the center of the rotation axis 50_C of the coating roll 50 is aligned with the lower part 112b of the first die lip 112 is different from the loading difference ΔBL2 for each bending level when the center of the rotation axis 50_C of the coating roll 50 is aligned with the upper part 132a of the third die lip 132.

As such, referring to FIG. 15, it is analyzed that the bending effect is partially different for each position of the center of the rotation axis 50_C of the coating roll 50. It should be noted that there is an interaction. Since the bending effect is different for each position of the center of the rotation axis 50_C of the coating roll 50, it is preferable to change the position of the bending center 142_C as well. The pressing portion where the bending force is applied by the bending unit 140 may be made to be the position with the smallest coating gap, so that the bending effect (sensitivity) is maintained.

According to the present disclosure, by forming the hole H fastening the bending unit 140 and the base 105 as a long hole, the bending center 142_C may move as well when the vertical die alignment position changes. The long hole H may be in the form of extending from behind the upper part 112a of the first die lip 112 to in front of the lower part 132b of the third die lip 132.

As such, in the present disclosure, when the center of the rotation axis 50_C of the coating roll 50 is changed with respect to the slot die coaters 100, 200, the bending center 142_C by the bending unit 140 may move as well.

Therefore, the center of the rotation axis 50_C of the coating roll 50 and the bending center 142_C may be aligned with each other and may be moved toward the second die block 120 rather than the upper part 112a of the first die lip 112. The coating gap becomes the smallest at the position of the bending pressing portion pressed by the bending unit 140. According to the present disclosure, the center of the rotation axis 50_C of the coating roll 50 and the bending center 142_C may be aligned on any part of the die lip of the vertical die type slot die coaters 100, 200.

In particular, in the dual slot die coater 200, an injection direction of the coating solution is in the center of the die blocks 110, 130, so that the amount of liquid applied to the center is greater than that to the side, which may result in a non-uniform coating profile in the width direction (perpendicular to the MD direction) of the substrate 60. In other words, the loading of the coating solution may be concentrated on the center of the first slot 115 and the second slot 125 in the width direction. In such a case, the position of the second die lip 122 and the third die lip 132 may be changed by pushing or pulling the base 105 part corresponding to the second die block 120 or the third die block 130 with the bending unit 140, thereby adjusting the coating gap and accordingly adjusting the loading distribution. When each of the die blocks 110, 120, 130 is pushed toward the discharge direction with the bending unit 140, the coating gap of the center part may be reduced. Conversely, when each of the die blocks 110, 120, 130 is pulled in a direction opposite to the discharge direction with the bending unit 140, the coating gap of the center part may be increased.

As described above, according to the comparative example in which the center alignment is different from the present disclosure, the coating gap is widened at the rear bead and the coating bead is unstable, resulting in back leak. According to the present disclosure, a stable coating bead may be formed by changing the alignment position of the coating roll 50 and the bending unit 140. Furthermore, the bending center 142_C may be moved together to have a uniform coating profile.

Meanwhile, the first die lip 112, the second die lip 122, and the third die lip 132 may be positioned on the same straight line. And, the thickness of the third die lip 132 may be greater than the thickness of the first die lip 112 and the thickness of the second die lip 122.

The window margin of the appropriate coating exists between the leaking region and the side ring region. The wider this appropriate process region, the better the productivity. The coating gap has a significant impact on the size and shape of the coating bead formed between the substrate 60 and the die lips 112, 122, 132 during coating, and the position of the dynamic contact line. According to the present disclosure, there is an advantage that the coating gap may be firstly kept constant by aligning the die lips 112, 122, 132, and may be allowed to have more leeway in setting the initial conditions to prevent leaking as much as possible by adjusting the initial conditions such as the physical properties of the coating solution, the flow rate and speed of the coating solution by expanding to the appropriate process region through the adjustment of the size of the die lips 112, 122, 132.

Preferably, referring to FIG. 9 again, the thickness D3 of the third die lip 132 is greater than the thickness D2 of the second die lip 122 and the thickness D1 of the first die lip 112. Accordingly, the thickness D3 of the third die lip 132 is greater than the average thickness of the thickness D1 of the first die lip 112 and the thickness D2 of the second die lip 122. In this way, the thickness D3 of the third die lip 132 is the greatest (D3 > D2, D3 > D1, D3 > (D1 + D2)/2). And, the thickness D2 of the second die lip 122 and the thickness D1 of the first die lip 112 may be equal to each other. The thickness D1 of the first die lip 112 may be greater than the thickness D2 of the second die lip 122.

The thickness D3 of the third die lip 132 : the thickness D1 of the first die lip 112 may be 1.2 : 1 or more. That is, the thickness D3 of the third die lip 132 may be 1.2 times or more the thickness D1 of the first die lip 112. If the thickness D3 of the third die lip 132 is greater than the thickness D1 of the first die lip 112, the appropriate process region may be increased. However, when the thickness D3 of the third die lip 132 is 1.2 times or more the thickness D1 of the first die lip 112, there is a definite effect of suppressing the occurrence of leaking. If the thickness D1 of the first die lip 112 is greater than the thickness D3 of the third die lip 132, leaking occurs.

The thickness D3 of the third die lip 132 : the thickness D2 of the second die lip 122 may be 1.2 : 1 or more. That is, the thickness D3 of the third die lip 132 may be 1.2 times or more the thickness D2 of the second die lip 122. If the thickness D3 of the third die lip 132 is greater than the thickness D2 of the second die lip 122, the appropriate process region may be increased. However, when the thickness D3 of the third die lip 132 is 1.2 times or more the thickness D2 of the second die lip 122, there is a definite effect of suppressing the occurrence of leaking. If the thickness D3 of the third die lip 132 and the thickness D2 of the second die lip 122 are the same, leaking occurs. If the thickness D2 of the second die lip 122 is greater than the thickness D3 of the third die lip 132, other pattern defects are caused even if no leaking occurs.

According to the above example, the thickness D3 of the third die lip 132 is the greatest because it is greater than the thickness D2 of the second die lip 122 and the thickness D1 of the first die lip 112. As the thickness D3 of the third die lip 132 increases, the appropriate process region becomes wider. Therefore, more leeway may be provided in controlling the coating gap or setting initial conditions. Thus, according to this configuration, productivity is excellent, and the dynamic contact line during coating may be used in various positions depending on the target coating product and quality. According to the present disclosure, as a result of the widening of the appropriate process region, the leaking limit may be improved, that is, increased. And, the side ring region may be reduced. Due to the reduced coating gap, when the dynamic contact line moves in the opposite direction of the coating, leaking occurs at a certain level or higher, and according to this configuration, the thickness D3 of the third die lip 132 may be increased to improve the leaking. This is because the second coating solution 160 may be retained in the third die lip 132 without being pulled back. According to the present disclosure, even when the coating gap is insufficient or the amount of coating solution supplied is large compared to the driving speed of the substrate 60, leaking is reduced.

As a preferred example, the thickness D3 of the third die lip 132 : the thickness D2 of the second die lip 122 : the thickness D1 of the first die lip 112 is 1.5 : 0.5 : 1.

In another example, the thickness D3 of the third die lip 132 and the thickness D1 of the first die lip 112 may be equal to each other and greater than the thickness D2 of the second die lip 122 (D3 = D1 > D2).

The thickness D3 of the third die lip 132 : the thickness D2 of the second die lip 122 may be 1.2 : 1 or more. That is, the thickness D3 of the third die lip 132 may be 1.2 times or more the thickness D2 of the second die lip 122. If the thickness D3 of the third die lip 132 is greater than the thickness D2 of the second die lip 122, the appropriate process region may be increased. However, when the thickness D3 of the third die lip 132 is 1.2 times or more the thickness D2 of the second die lip 122, there is a definite effect of suppressing the occurrence of leaking. If the thickness D3 of the third die lip 132 and the thickness D2 of the second die lip 122 are the same, leaking occurs. If the thickness D2 of the second die lip 122 is greater than the thickness D3 of the third die lip 132, other pattern defects are caused even if no leaking occurs.

The thickness D1 of the first die lip 112 may be made the same as the thickness D3 of the third die lip 132 and may be greater than the thickness D2 of the second die lip 112. The thickness D1 of the first die lip 112 is not made greater than the thickness D3 of the third die lip 132 to suppress the occurrence of leaking.

According to the above example, the thickness D3 of the third die lip 132 is large, and thus the appropriate process region is widened. Therefore, more leeway may be provided in controlling the coating gap or setting initial conditions.

For example, the electrode active material slurry coating method using the slot die coater of the present disclosure is applied to the manufacture of a positive electrode of a secondary battery. The positive electrode has a structure in which a lower active material layer by a lower slurry layer and an upper active material layer by an upper slurry layer are sequentially stacked on a current collector. The lower active material layer contains a high content of a conductive agent, and the upper active material layer contains a relatively low content of a conductive agent. In this case, the conductive agent content of the lower active material layer may be adjusted in the range of 0.5 to 5 wt%. The upper active material layer may increase the active material content on the electrode surface and lower the electrical conductivity to a certain level by reducing the conductive agent content. In particular, when the conductive agent content of the upper active material layer is controlled to a very low level of 0.02 wt% or less, the exothermic reaction may be reduced when a short circuit occurs inside the cell.

In another example, the average particle diameter P1 of the active material forming the lower active material layer is in the range of 50 to 95% of the average particle diameter P2 of the active material forming the upper active material layer. In this case, an active material with a relatively small particle diameter is applied to the lower active material layer. By applying an active material with a relatively large particle diameter to the upper active material layer, it is possible to facilitate electrolyte impregnation and induce smooth movement of ions or holes.

Here, the flow rate ratio of the first coating solution 150 and the second coating solution 160 may be 1 : 1. The viscosity of the first coating solution 150 and the second coating solution 160 may be 1000 cps or more. Since it is necessary to be able to coat a coating solution with a viscosity of 1000 cps or more, the dual slot die coater 200 of the present disclosure is different from the structure of a device that applies a coating solution with a lower viscosity than this, for example, ordinary resin liquids, such as a photographic sensitizing emulsion liquid, a magnetic liquid, a liquid imparting antireflection or antiglare properties, a liquid imparting a viewing angle enlargement effect, a pigment liquid for a color filter, and the like, and is not a device that can be reached by changing it. The first coating solution 150 and the second coating solution 160 may include graphite, a conductive agent, CMC, and a binder.

Under the above coating conditions, most preferably, the thickness D3 of the third die lip 132 : the thickness D2 of the second die lip 122 : the thickness D1 of the first die lip 112 is 3 : 1 : 1. According to this dual slot die coater 200, the process efficiency may be increased and the defect rate may be reduced when forming a two-layer structure of an active material layer on a current collector.

For a specific example, by coating the positive electrode active material slurry using the dual slot die coater 200 of the present disclosure, the dual slot die coater 200 may be applied to the manufacture of a positive electrode of a secondary battery. The positive electrode includes a current collector and a positive electrode active material layer formed on a surface of the current collector. The current collector exhibits electrical conductivity, such as Al, Cu, or the like, and may be used appropriately according to the polarity of the current collector electrode known in the field of secondary batteries. The positive electrode active material layer may further include at least one of a plurality of positive electrode active material particles, a conductive agent, and a binder. Additionally, the positive electrode may further include various additives for the purpose of supplementing or improving electrochemical properties.

The active material is not limited to a specific component as long as it can be used as a positive electrode active material of a lithium-ion secondary battery. Non-limiting examples thereof may include any one selected from: layered compounds such as lithium manganese composite oxides (LiMn₂O₄, LiMnO₂, and the like), lithium cobalt oxide (LiCoO₂), and lithium nickel oxide (LiNiO₂), or compounds substituted with one or more transition metals; lithium manganese oxides with the formula Li₁₊ₓMn₂₋ₓO₄ (where x is 0 to 0.33) such as LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; Ni site-type lithium nickel oxide represented by the formula LiNi₁₋ₓMₓO₂ (where M is Co, Mn, Al, Cu, Fe, Mg, B, or Ga, and x is 0.01 to 0.3); lithium manganese composite oxide represented by the formula LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); LiMn₂O₄ in which a part of Li in the formula is substituted with an alkaline earth metal ion; disulfide compounds; and Fe₂(MoO₄)₃; or a mixture of two or more of them. In the present disclosure, the positive electrode may include at least one of a polymer-based solid electrolyte, an oxide-based solid electrolyte, and a sulfide-based solid electrolyte as a solid electrolyte material.

The conductive agent may be typically added in an amount of 1wt% to 20wt% based on the total weight of the mixture including the active material. Such a conductive agent is not particularly limited as long as it has conductivity without causing chemical change in the corresponding battery, and particular examples thereof may include any one selected from: graphite such as natural graphite or artificial graphite; carbon black such as acetylene black, ketjen black, channel black, furnace black, lamp black, and summer black; conductive fibers such as carbon fibers or metal fibers; carbon fluoride; metal powders such as aluminum, and nickel powder; conductive whiskers such as zinc oxide and potassium titanate; conductive metal oxides such as titanium oxide; and conductive agents such as polyphenylene derivatives; or a mixture of two or more of them.

The binder is not particularly limited as long as it is a component that aids in the binding of the active material and the conductive agent and the binding to the current collector, and particular examples thereof may include polyvinylidene fluoride polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber, fluoro rubber, various copolymers, and the like. The binder may be typically included in the range of 1wt% to 30wt%, or 1wt% to 10wt% based on 100wt% of the electrode layer.

By coating the negative electrode active material slurry using the dual slot die coater 200 of the present disclosure, the dual slot die coater 200 may be applied to the manufacture of a negative electrode of a secondary battery. The negative electrode includes a current collector and a negative electrode active material layer formed on a surface of the current collector. The negative electrode active material layer may further include at least one of a plurality of negative electrode active material particles, a conductive agent, and a binder. Additionally, the negative electrode may further include various additives for the purpose of supplementing or improving electrochemical properties.

As for the negative electrode active material, a carbon material such as graphite, amorphous carbon, diamond-like carbon, fullerene, carbon nanotube, and carbon nanohorn; a lithium metal material; an alloy material such as silicon or tin; an oxide material such as Nb₂O₅, Li₅Ti₄O₁₂ and TiO₂; or a combination of them may be used. For the negative electrode, the conductive agent, the binder, and the current collector may refer to the contents described for the positive electrode.

The electrode active material slurry including the positive electrode active material or the negative electrode active material has a very high viscosity. For example, the viscosity may be 1000 cps or more. The viscosity of the electrode active material slurry for use in forming a secondary battery electrode may be 2000 cps to 30000 cps. For example, the negative electrode active material slurry may have a viscosity of 2000 cps to 4000 cps. The positive electrode active material slurry may have a viscosity of 8000 cps to 30000 cps. Since it is necessary to be able to coat a coating solution with a viscosity of 1200 cps or more, the dual slot die coater 200 of the present disclosure is different from the structure of a device that applies a coating solution with a lower viscosity than this, for example, ordinary resin liquids, such as a photographic sensitizing emulsion liquid, a magnetic liquid, a liquid imparting antireflection or antiglare properties, a liquid imparting a viewing angle enlargement effect, a pigment liquid for a color filter, and the like, and is not a device that can be reached by changing it. The dual slot die coater 200 of the present disclosure is for applying an active material slurry that may include an active material having an average particle diameter of, for example, around 10 µm, so that it is different from the device structure for applying other coating solutions that do not include particles of this size and is not a device that can be reached by changing it.

FIG. 16 is a modified example of FIG. 8.

Referring to FIG. 16, the third die lip 132 is behind the first die lip 112 or the second die lip 122.

The distance H3 between the substrate 60 and the third die lip 132 is greater than the distance H1 between the substrate 60 and the first die lip 112 and the distance H2 between the substrate 60 and the second die lip 122. By positioning the third die lip 132 further away from the substrate 60 than the first die lip 112 and the second die lip 122 in a direction opposite to the discharge direction, this distance difference may be created to form a step between the die lips. The distance H1 between the substrate 60 and the first die lip 112 and the distance H2 between the substrate 60 and the second die lip 122 may be equal to each other.

Accordingly, a predetermined step D' is formed between the second outlet 126 and the first outlet 116. This step D' is a distance obtained by subtracting the distance H1 between the substrate 60 and the first die lip 112 from the distance H3 between the substrate 60 and the third die lip 132. Since the second outlet 126 and the first outlet 116 are disposed at positions spaced apart from each other along the horizontal direction by this step D', there is no concern that the first coating solution 150 discharged from the first outlet 116 will flow into the second outlet 126, or that the second coating solution 160 discharged from the second outlet 126 will flow into the first outlet 116. As described above, the configuration of the present embodiment is characterized in that the second die block 120 and the third die block 130 forming the second outlet 126 are spaced apart from each other.

As illustrated, in a state where the positions of the die lips 112, 122, 132 are set, the first outlet 116 is positioned to be spaced apart from the second outlet 126 toward the downstream side of the coating direction. When the coating solution is simultaneously discharged through the second outlet 126 and the first outlet 116 while driving the substrate 60 from the third die lip 132 toward the first die lip 112, an active material layer may be formed on the substrate 60 in a two-layer structure.

The present disclosure is to separate only the lower layer upstream from the substrate 60 in a direction further away from the substrate 60 based on the lower layer slurry, that is, the second coating solution 160 discharged from the second outlet 126. In other words, while creating a height difference between the second die block 120 and the third die block 130, which are two plates forming the second outlet 126, the third die block 130 is moved further away from the substrate 60. This is different from the case where only the movement of the outlet itself is utilized without distinction between upstream and downstream.

The ratio of the average thickness T1 of the lower slurry layer formed by the second coating solution 160 discharged through the second outlet 126 to the average thickness T2 of the upper slurry layer formed by the first coating solution 150 discharged through the first outlet 116 may be in the range of 1:3 to 3:1 (T1:T2). The thickness ratio is relatively representing an average value of the length of each layer in the thickness direction. And, each of the average thicknesses T1, T2 of the lower slurry layer and the upper slurry layer may be 40 to 200 µm.

The thickness of the slurry layer as described above can be seen as the pressure of the coating solution to be supplied soon. When the pressure of the first coating solution 150 is supplied at more than three times the pressure of the second coating solution 160 so that the thickness ratio of the lower slurry layer and the upper slurry layer is 1:3 or more, the upper layer has a stronger pressure than the lower layer, thereby pushing the second coating solution 160 to the rear, which is a direction opposite to the coating direction, to increase the possibility of leaking, and the second coating solution 160 may not be supplied properly due to the strong pressure of the first coating solution 150. Additionally, since the supply of the second coating solution 160 is not uniform due to the high pressure of the first coating solution 150, there is a problem of being difficult to form the lower slurry layer uniformly.

On the other hand, when the pressure of the second coating solution 160 is supplied at more than three times the pressure of the first coating solution 150 so that the thickness ratio of the lower slurry layer and the upper slurry layer is 3:1 or more, the supply of the first coating solution 150 may become difficult, or there is a problem that the coating of the first coating solution 150 may be pushed in the coating direction, making the coating solution surface uneven.

Preferably, the step D' is in the range of 20 to 70% of the sum of the average thickness T1 of the lower slurry layer and the average thickness T2 of the upper slurry layer. When the range is less than 20%, the effect of shortening the loading drop length when the supply of the coating solution is stopped is small. When the range exceeds 70%, the total area of the space where the coating solution stays to be coated, that is, the space between the die lips 122, 132 and the lower slurry layer, is insufficient compared to the amount of the coating solution, so that the second coating solution 160 supplied may not be coated and leaks backward, resulting in leaking.

For intermittent coating, when the supply of the coating solution is stopped during pattern formation, the loading is gently cut off and a loading-off phenomenon occurs. This loading-off phenomenon is a phenomenon that occurs when the supply of the coating solution is stopped for end formation, the residual coating solution remaining to form a meniscus or a bead between the dual slot die coater 200 and the substrate 60 is coated even on the substrate 60. In the present embodiment, since the third die block 130 is behind the second die block 120 as shown in FIG. 16, the amount of the residual coating solution remaining to form a meniscus or a bead between the dual slot die coater 200 and the substrate 60 is reduced. The length S' from the upper die lip 112 to the meniscus of the second coating solution 160 is shortened. Accordingly, when the supply of the coating solution is stopped, the loading is not gently cut off and the length of the loading is short. Therefore, the pattern end may be ideally formed almost perpendicular to the substrate 60, and the length of the loading off section may be reduced. The loading off section acts as a surplus part to be discarded, which causes a decrease in process efficiency and an increase in manufacturing cost. According to the present configuration, since the loading off section is shortened, the surplus part to be discarded is reduced, resulting in an increase in process efficiency and a decrease in manufacturing cost.

In another example, the first die lip 112 may be behind the second die lip 122 or the third die lip 132.

In this case, although not illustrated separately, there is a relationship of H1 > H2, H1 > H3 between the distance H1 between the substrate 60 and the first die lip 112, the distance H2 between the substrate 60 and the second die lip 122, and the distance H3 between the substrate 60 and the third die lip 132 shown in FIG. 16. At this time, H2 may be equal to H3. By positioning the first die lip 112 further away from the substrate 60 than the second die lip 122 and the third die lip 132 in a direction opposite to the discharge direction, this distance difference may be created to form a step between the die lips. In this case, the upper coating gap and the lower coating gap may be individually controlled depending on the degree by which the first die lip 112 is behind the second die lip 122 or the third die lip 132.

In still another example, the second die lip 122 may be behind the first die lip 112 or the third die lip 132.

In this case, although not illustrated separately, there is a relationship of H2 > H1, H2 > H3 between the distance H1 between the substrate 60 and the first die lip 112, the distance H2 between the substrate 60 and the second die lip 122, and the distance H3 between the substrate 60 and the third die lip 132 shown in FIG. 16. At this time, H1 may be equal to H3. By positioning the second die lip 122 further away from the substrate 60 than the first die lip 112 and the third die lip 132 in a direction opposite to the discharge direction, this distance difference may be created to form a step between the die lips. In this case, when the supply of the coating solution is stopped for intermittent coating, there is an effect of preventing the residual coating solution adhering to the second die lip 122 from falling messily on the substrate 60 and causing pattern defects such as drag lines.

In still another example, the third die lip 132 may be behind of the first die lip 112 or the second die lip 122.

In this case, although not illustrated separately, there is a relationship of H1 > H3, H2 > H3 between the distance H1 between the substrate 60 and the first die lip 112, the distance H2 between the substrate 60 and the second die lip 122, and the distance H3 between the substrate 60 and the third die lip 132 shown in FIG. 16. At this time, H1 may be equal to H2. By pushing the third die lip 132 toward the discharge direction and positioning it closer to the substrate 60 than the first die lip 112 and the second die lip 122, this distance difference may be created to form a step between the die lips. When a back leak occurs due to too much additional gap in the lower layer, the back leak may be further reduced by advancing only the third die lip 132 to reduce the lower layer coating gap, in addition to reducing the back leak by positioning the center of the rotation axis 50_C of the coating roll 50 toward the second die block 120 rather than the upper part 112a of the first die lip 112 as proposed in the present disclosure. The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [Explanation of Reference Signs]

| | | | |
|---|---|---|---|
| 50: | coating roll | 60: | substrate |
| 100: | slot die coater | 105: | base |
| 110: | first die block | 112: | first die lip |
| 115: | slot, first slot | 116: | outlet |
| 117: | shim | 118: | manifold |
| 120: | second die block | 122: | second die lip |
| 125: | second slot | 126: | second outlet |
| 127: | shim | 130: | third die block |
| 132: | third die lip | 138: | manifold |
| 140: | bending unit | 142: | die connection |
| 144: | body | 150: | first coating solution |
| 160: | second coating solution | 200: | dual slot die coater |
| B: | bolt | H: | hole |
| S: | bending space | | |

## Claims

1. A slot die coater having a slot for discharging a coating solution in the opposite direction of gravity onto a surface of a substrate that is continuously driven and transferred by a coating roll, the slot die coater comprising:
a first die block; and
a second die block forming the slot between the first die block and the second die block,
wherein a center of rotation axis of the coating roll is positioned toward the second die block rather than an upper part of a first die lip forming a tip of the first die block with respect to the substrate.

2. The slot die coater according to claim 1, wherein the first die block is vertically installed integrally with a base at a rear part of an upper surface of the base, and the second die block is disposed on a front surface of the first die block.

3. The slot die coater according to claim 2, wherein the second die block is not in surface contact with the base, or forms a bending space between the base and the second die block even if it is in surface contact with the base.

4. The slot die coater according to claim 3, wherein a bending unit is connected to a lower end of the base to deform the bending space.

5. The slot die coater according to claim 4, wherein the position of the bending unit is changeable by forming a hole formed in the base as a long hole in the front-back direction to fasten the bending unit and the base.

6. The slot die coater according to claim 4, wherein the center of rotation axis of the coating roll is aligned with a bending center by the bending unit.

7. The slot die coater according to claim 2, further comprising: a third die block disposed on a front surface of the second die block and forming an additional slot between the second die block and the third die block.

8. The slot die coater according to claim 7, wherein the center of rotation axis of the coating roll is positioned in the middle of the first die lip, or in the lower part of the first die lip, or in the upper part of the second die lip forming the tip of the second die block, or in the middle of the second die lip, or in the lower part of the second die lip, or in the upper part of the third die lip forming the tip of the third die block.

9. The slot die coater according to claim 7, wherein the second die block is not in surface contact with the base, or forms a bending space between the base and the second die block even if it is surface contact with the base, wherein a bending unit is connected to a lower end of the base to deform the bending space, and by forming a hole formed in the base as a long hole in the front-back direction to fasten the bending unit and the base, the center of rotation axis of the coating roll is aligned with a bending center by the bending unit.

10. The slot die coater according to claim 9, wherein the long hole is formed to extend from behind the upper part of the first die lip to in front of the lower part of the third die lip forming the tip of the third die block.

11. A slot die coater having a slot for discharging a coating solution in the opposite direction of gravity onto a surface of a substrate that is continuously driven and transferred by a coating roll, the slot die coater comprising:
a first die block vertically installed integrally with the base at the rear part of the upper surface of the base;
a second die block forming the slot between the first die block and the second die block; and
a bending unit connected to the lower end of the base,
wherein the bending center by the bending unit is configured to move together when the center of rotation axis of the coating roll is changed with respect to the slot die coater.

12. The slot die coater according to claim 11, wherein the center of rotation axis of the coating roll is positioned toward the second die block rather than an upper part of a first die lip forming a tip of the first die block with respect to the substrate.

13. The slot die coater according to claim 12, wherein the position of the bending unit is changeable by forming a hole formed in the base as a long hole in the front-back direction to fasten the bending unit and the base.

14. The slot die coater according to claim 11, further comprising: a third die block disposed on a front surface of the second die block and forming an additional slot between the second die block and the third die block.

15. The slot die coater according to claim 14, wherein the cross-section of the second die block is a right triangle.

16. The slot die coater according to claim 14, wherein the first die block, the second die block and the third die block have a first die lip, a second die lip and a third die lip forming the tip of each die, wherein the center of rotation axis of the coating roll is positioned toward the second die block rather than the upper part of the first die lip with respect to the substrate, and the first die lip, the second die lip and the third die lip are positioned on the same straight line, or the third die lip is behind the first die lip or the second die lip.

17. The slot die coater according to claim 14, wherein the first die block, the second die block and the third die block have a first die lip, a second die lip and a third die lip forming the tip of each die, wherein the center of rotation axis of the coating roll is positioned toward the second die block rather than the upper part of the first die lip with respect to the substrate, and the first die lip is behind the second die lip or the third die lip, or the second die lip is behind the first die lip or the third die lip, or the third die lip is in front of the first die lip or the second die lip.

18. The slot die coater according to claim 16, wherein the thickness of the third die lip is greater than the thickness of the first die lip and the thickness of the second die lip.

19. The slot die coater according to claim 16, wherein the thickness of the third die lip is equal to the thickness of the first die lip and is greater than the thickness of the second die lip.
